(19) Europäisches Patentamt
European Patent Office
Office européen des brevets

(11) **EP 4 197 869 A1**

(12) **EUROPEAN PATENT APPLICATION**

(43) Date of publication:
**21.06.2023 Bulletin 2023/25**

(21) Application number: **22183308.0**

(22) Date of filing: **06.07.2022**

(51) International Patent Classification (IPC):
**B60W 10/08** (2006.01)   **B60W 10/18** (2012.01)
**B60W 10/26** (2006.01)   **B60W 20/14** (2016.01)
**B60W 30/14** (2006.01)   **B60W 40/10** (2012.01)
**B60W 50/00** (2006.01)

(52) Cooperative Patent Classification (CPC):
**B60W 10/08; B60W 10/18; B60W 10/26;
B60W 20/14; B60W 30/14; B60W 40/1005;
B60W 50/0097;** B60W 2050/0031; B60W 2552/30;
B60W 2710/242; B60W 2720/10; B60W 2720/30;
B60W 2754/30

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.12.2021 KR 20210180478**

(71) Applicants:
• **HYUNDAI MOTOR COMPANY**
  **Seoul 06797 (KR)**

• **Kia Corporation**
  **Seocho-gu**
  **Seoul 06797 (KR)**

(72) Inventor: **WOO, Min Soo**
     **06797 Seoul (KR)**

(74) Representative: **Viering, Jentschura & Partner
     mbB
     Patent- und Rechtsanwälte
     Am Brauhaus 8
     01099 Dresden (DE)**

(54) **VEHICLE DRIVING CONTROL METHOD WITH OPTIMAL BATTERY ENERGY EFFICIENCY**

(57) A vehicle driving control method with optimal efficiency includes a first step of state variable modeling of a longitudinal dynamics equation of a vehicle based on a velocity-related state variable and a wheel drive input variable, a second step of calculating wheel power using the state variable and the input variable, a third step of calculating battery power using the wheel power calculation, a fourth step of approximating the battery power, and a fifth step of outputting a wheel drive control target by calculating a minimum solution by using the approximated battery power as an objective function and applying at least one constraint to the objective function.

FIG. 1

EP 4 197 869 A1

**Description**

**CROSS-REFERENCE TO RELATED APPLICATION**

This application claims the benefit of priority to Korean Patent Application No. 10-2021-0180478, filed on December 16, 2021 in the Korean Intellectual Property Office, the entire content of which is incorporated herein by reference.

**TECHNICAL FIELD**

The present disclosure relates to a vehicle driving control method, and more particularly, to a method of controlling driving of a vehicle with optimal battery efficiency.

**BACKGROUND**

Recently, driving technology for improving the driving convenience for a driver has been continuously developed, and the function thereof is gradually improving.

For example, cruise control has evolved into smart cruise control technology that is controlled by following the stopping and starting of a preceding vehicle beyond the simple cruise control level. Accordingly, cruise control driving has become available not only on leisurely suburban roads, but also on rather congested roads such as in downtown areas.

Such cruise control is expected to be more advanced with the development of autonomous driving technology.

However, since the conventional cruise control is designed in consideration of driving convenience or safety only, it is insufficient because the aspect of energy efficiency is not considered.

According to the policy for reducing $CO_2$ emission, countries around the world are strengthening support for eco-friendly vehicles such as an electric vehicle, and following this trend, it is expected that a vehicle with an internal combustion engine will not be seen on the road in the near future.

Such an eco-friendly vehicle is generally driven by a motor, which is driven by receiving power from eco-friendly energy. For example, a hybrid vehicle or an electric vehicle is driven by a motor driven by receiving power from a battery mounted in the vehicle.

In the case of an electric vehicle, the mileage on a single battery charge is very important, and battery technology continues to be developed so as to improve energy efficiency. However, in addition to battery technology, driving control technology for driving a vehicle with optimal energy efficiency is important.

Particularly, because the conventional cruise control is insufficient in terms of energy efficiency as described above, a driving control method with optimal efficiency for increasing the energy efficiency of an electric vehicle is needed.

The information disclosed in the Background section above is to aid in the understanding of the background of the present disclosure, and should not be taken as acknowledgement that this information forms any part of prior art.

**SUMMARY OF THE DISCLOSURE**

Accordingly, the present disclosure is directed to a vehicle driving control method that substantially obviates one or more problems due to limitations and disadvantages of the related art.

An object of the present disclosure is to provide a driving control method with optimal efficiency for an eco-friendly vehicle driven by electric power.

When applied to cruise control, a driving control method of achieving cruise control driving with optimum efficiency is provided.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the disclosure, as embodied and broadly described herein, there is provided a vehicle driving control method with optimal efficiency, the method including obtaining a state variable model of a longitudinal dynamics equation of a vehicle based on a velocity-related state variable and a wheel drive input variable, calculating wheel power using the velocity-related state variable and the wheel drive input variable, calculating battery power using the calculated wheel power, obtaining an approximated battery power function using the calculated battery power, and outputting a wheel drive control target by calculating a minimum solution by using the approximated battery power function as an objective function and applying at least one constraint to the objective function.

The wheel drive control target may be a control target related to wheel traction force or wheel braking force.

The velocity-related state variable may include a square of velocity, and the wheel drive input variable may include wheel traction force and wheel braking force.

Here, the calculating of battery power may be performed by multiplying the calculated wheel power by at least one of motor efficiency, battery charging and discharging efficiency, and reducer efficiency.

The state variable model may be defined by a relationship between work done by a wheel and a change in vehicle kinetic energy under air resistance, rolling resistance, and gravity resistance for a predetermined distance movement.

In addition, the objective function may further include a target-velocity-following function.

Additionally, the at least one constraint may include at least one of an average velocity constraint, a traveling velocity band constraint, a motor constraint according to a vehicle velocity, a safe distance constraint from a preceding vehicle, or a safe velocity constraint according to a road curvature.

The obtaining of a state variable model, the calculating of wheel power, the calculating of battery power, the approximating of the battery power, and the outputting of a wheel drive control target may be performed for a set forward prediction horizon.

In addition, the set forward prediction horizon may be divided into a plurality of distance-based or time-based steps, the minimum solution may be calculated for all of the plurality of distance-based or time-based steps, and the wheel drive control target may be obtained from a minimum solution corresponding to a first step among the plurality of distance-based or time-based steps.

In addition, the set forward prediction horizon may be defined as a range of time distance or traveling distance. For example, the set forward prediction horizon may be set to 1,500 m when defined as a traveling distance range, and set to 108 seconds when defined as a time distance range.

The setting of the set forward prediction horizon may be constant. In other words, the size range of the set forward prediction horizon does not change according to traveling of a vehicle and may be maintained constant.

Meanwhile, when the output wheel braking force is less than or equal to a predetermined value, all of the output wheel braking force may be distributed to regenerative braking force, and when the output wheel braking force exceeds the predetermined value, the output wheel braking force may be distributed to regenerative braking force and mechanical braking force.

The approximated battery power function may comprise a quadratic function of the velocity-related state variable and the wheel drive input variable.

In addition, the method may further include receiving a selection of a cruise control travel mode by a user.

Still further, the method may further include performing a brake or motor control of the vehicle based on the outputted wheel drive control target.

Another object of the present disclosure is to provide a vehicle driving control device including a travel strategy control unit configured to collect curvature and slope information, speed limit information, and traffic enforcement camera location information for a road section in a set forward prediction horizon, collect information on a distance from a preceding vehicle from a sensor, and to calculate a minimum solution of an objective function by applying at least one constraint among an average velocity constraint, a traveling velocity band constraint, a motor constraint according to a vehicle velocity, a safe distance constraint from a preceding vehicle, and a safe velocity constraint according to a road curvature, wherein a battery power for traveling in the set forward prediction horizon is used as the objective function, and a travel assistant unit configured to output a control signal so as to control a motor and a brake with traction force and braking force derived from the minimum solution.

It is to be understood that both the foregoing general description and the following detailed description of the present disclosure are exemplary and explanatory and are intended to provide further explanation of the disclosure as claimed.

## BRIEF DESCRIPTION OF THE DRAWINGS

The accompanying drawings, which are included to provide a further understanding of the disclosure and are incorporated in and constitute a part of this application, illustrate embodiment(s) of the disclosure, without being limited thereto, and together with the description help for the better understanding of the disclosure. In the drawings:

FIG. 1 shows a flowchart of an embodiment of the present disclosure;
FIG. 2 is a schematic diagram of a traveling vehicle for explaining an embodiment of state variable modeling of a longitudinal dynamics equation;
FIG. 3 shows a simulation result according to the length of prediction horizon in an embodiment of the present disclosure;
FIG. 4 shows an example of approximating battery power on linear and quadratic planes;

FIG. 5 shows an example of approximating battery power on a quadratic plane based on a target velocity set in cruise control;

FIG. 6 shows an example in which a prediction horizon is divided into n steps;

FIG. 7 explains an example of "traveling velocity band constraint";

FIG. 8 explains an example of "motor constraint according to a vehicle velocity";

FIG. 9 explains an example of "safe distance constraint from preceding vehicle";

FIG. 10 explains an example of "safe velocity constraint according to road curvature";

FIG. 11 schematically shows the process of finding an optimal solution of an objective function that satisfies constraint;

FIG. 12 is an example of distribution of regenerative braking and/or mechanical braking;

FIG. 13 is a diagram schematically illustrating states such as road height, velocity, traction force, regenerative braking force, and mechanical braking force according to traveling of a vehicle for each case of FIG. 12;

FIG. 14 is a simulation result of one embodiment of the present disclosure according to three road types; and

FIG. 15 shows a driving control device according to an embodiment of the present disclosure.

## DETAILED DESCRIPTION OF THE DISCLOSURE

Since the present disclosure may be variously changed and may have various embodiments, exemplary embodiments will be illustrated and described in the drawings. However, this is not intended to limit the present disclosure to the exemplary embodiments, and it should be understood to include all modifications, equivalents and substitutes included in the idea and scope of the present disclosure.

As used herein, the suffixes "module" and "unit" are used only for descriptive distinction between components, and should not be construed as an assumption that the components are physically and chemically distinguished or separated, or that the components can be distinguished or separated as such.

It will be understood that, although the terms first, second, etc. may be used herein to describe various elements, these elements should not be limited by these terms. These terms are generally only used to distinguish one element from another.

The term "and/or" is used to include any combination of plural subject items. For example, "A and/or B" includes all three cases such as "A", "B", and "A and B".

It will be understood that when an element is referred to as being "connected to" another element, the element can be directly connected to the other element, or intervening elements may also be present.

In the following description of the embodiments, it will be understood that, when an element such as a layer (film), region, pattern, or structure is referred to as being "on" or "under" another element, it can be "directly" on or under the other element, or can be "indirectly" disposed such that an intervening element is also present. In addition, the criteria for the terms "upper/above" or "lower/under" is, in principle, used merely to indicate the relative positional relationship between the components based on the figure shown in the drawings for convenience, unless it is naturally determined from the nature of each of the components or between the same, or unless otherwise expressed in the specification, and should not be construed as limiting the location of the actual components. For example, "B located above A" merely indicates that B is illustrated as being located above A in the drawing, unless otherwise stated or in the case in which B must be located above A due to the nature of A or B, and in the actual product, etc., B may be located under A, and B and A may be arranged left and right horizontally.

In addition, since the thickness or size of each layer (film), region, pattern, or structure in the drawings may be changed for clarity and convenience of description, the dimensions of constituent elements may not accurately reflect the actual dimensions.

The terminology used herein is for the purpose of describing particular embodiments only, and is not intended to be limiting. A singular representation may include a plural representation unless the context clearly indicates otherwise. As used herein, the singular forms "a", "an", and "the" are intended to include the plural forms as well, unless the context clearly indicates otherwise. It will be further understood that the terms "comprise", "have", etc., when used in this specification, specify the presence of stated features, integers, steps, operations, elements, components, or combinations thereof, but do not preclude the presence or addition of one or more other features, integers, steps, operations, elements, components, or combinations thereof.

Unless otherwise defined, all terms including technical and scientific terms used herein have the same meanings as those commonly understood by one of ordinary skill in the art to which this disclosure belongs. It will be further understood that terms, such as those defined in commonly used dictionaries, should be interpreted as having meanings consistent with their meanings in the context of the relevant art and the present disclosure, and are not to be interpreted in an idealized or overly formal sense unless expressly so defined herein.

In addition, "unit" or "control unit" is merely a term widely used in naming a controller that controls a specific function of a vehicle, and does not mean a generic functional unit. For example, each unit or control unit according to various aspects of the present disclosure may include a communication device (e.g., transceiver or processor) configured to communicate with another controller or sensor so as to control the function it is responsible for, a non-transitory memory configured to store an operating system or logic commands, input and output information, etc., and one or more processors configured to perform judgment, calculation, decision, etc. needed in controlling the function it is responsible for.

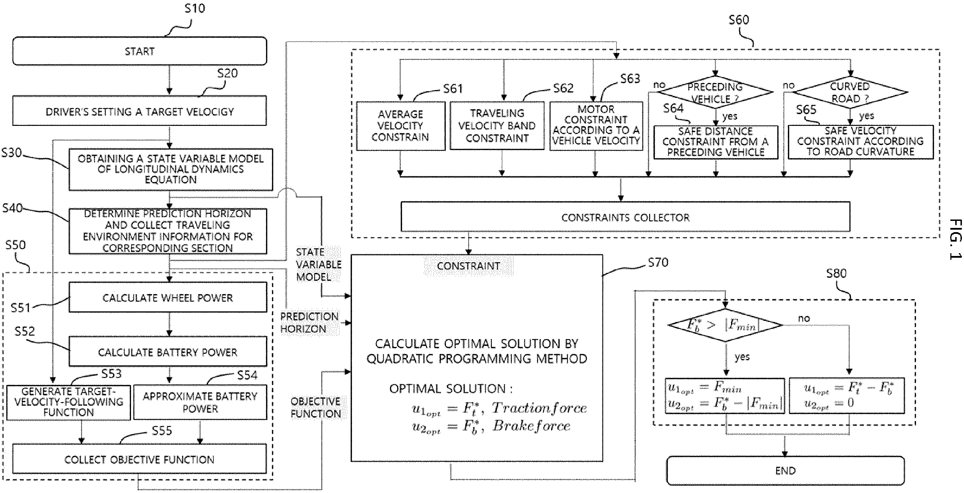

FIG. 1 is a flowchart of a driving control method with optimal efficiency according to an embodiment of the present disclosure.

First, the driving control method of this embodiment may be implemented as a vehicle driving control device and mounted in a vehicle. For example, the driving control device includes a travel strategy control unit and a travel assistant unit, and a detailed description will be given later.

The driving control method of this embodiment may be started when a driver selects a travel mode (S10). For example, a travel mode selector such as a selection button or a lever for selecting a travel mode such as cruise control, smart cruise control, and pulse and glide may be provided in a vehicle within reach of a driver.

The driving control method of this embodiment may be applied and implemented as an added part to the conventional traveling technology unless there is a particular reason that the method cannot be applied. For example, by applying the control method of this embodiment to cruise control, it may be possible to implement traveling with improved energy efficiency compared to traveling controlled by the conventional cruise control.

In addition, the driving control technology to which the driving control method of the present embodiment is applied may be named differently from the conventional technology, and may be exemplarily referred to as "eco cruise control".

In this case, the travel mode selector may be configured for a driver to select the eco cruise control, and when a driver selects the eco cruise control, the control method of this embodiment may be implemented.

Meanwhile, the driving control method according to this embodiment may be implemented in such a way that an additional function is added by a driver selection while driving control is performed by another driving technique. For example, when an additionally provided button "eco" is selected while a vehicle is traveling in a general cruise control travel mode, the general cruise control travel mode may be switched to the cruise control travel mode to which the control method of this embodiment is applied.

When starting the control method of this embodiment (S10), first, a driver sets a target velocity (S20). For example, the target velocity may be determined by a driver's selection or may be automatically set to one at which the vehicle is currently traveling.

Here, in the case of the above-described "eco" button, setting of the target velocity (S20) may precede the starting (S10) of the control method of this embodiment. In other words, when the general cruise control is selected, the target velocity is set (S20), and then, when the "eco" button is input, the control method of this embodiment is executed (S10).

In other words, the order between starting the method and setting the target velocity is not limited to the control method of this embodiment, and may vary depending on the circumstances of an implemented embodiment.

Next, the obtaining of a state variable model of a longitudinal dynamics equation is performed (S30).

Then, a prediction horizon is determined and traveling environment information on the prediction horizon is collected (S40) .

Next, an objective function is generated (S50). To this end, first, wheel power is calculated (S51), battery power is calculated using the calculated wheel power (S52), and then, the battery power is approximated (S54).

A target-velocity-following function is generated according to the target velocity value set by a driver (S53), then each weight is determined together with the approximated battery power function so as to generate an objective function (S55) .

Here, constraints such as an average velocity constraint, a traveling velocity band constraint, a motor constraint according to a vehicle velocity, a safe distance constraint from a preceding vehicle, and a safe velocity constraint according to a road curvature are collected (S60).

An optimal solution of the objective function for the corresponding prediction horizon is calculated by adding the constraints, thereby outputting traction force and/or braking force (S70).

Here, the output braking force is distributed to regenerative braking and/or mechanical braking (S80).

Hereinafter, each step of the control method of this embodiment will be described in detail.

1. Obtaining a state variable model of longitudinal dynamics equation (S30)

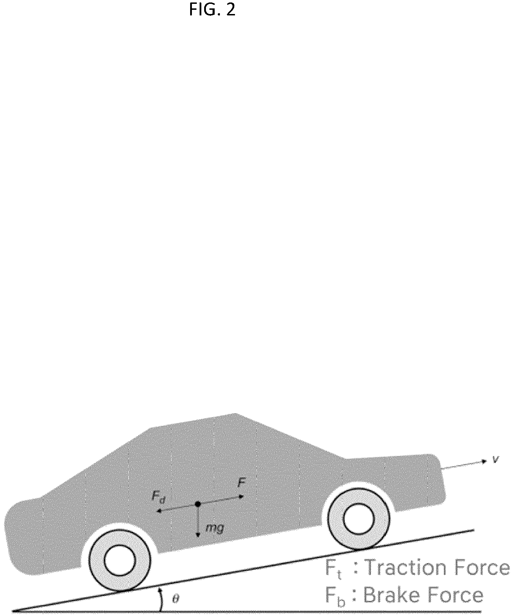

FIG. 2 shows a vehicle traveling on a road having a longitudinal slope angle $\theta$, and the longitudinal dynamics equation for the vehicle is as shown in Equation 1 below.

[Equation 1]

$$\tfrac{1}{2}mv(k+1)^2 - \tfrac{1}{2}mv(k)^2$$

$$= \triangle s(F_t - F_b - F_{roll} - F_{air} - F_g)$$

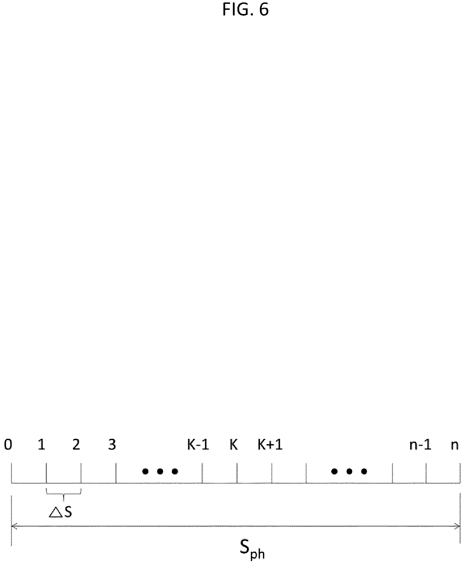

Here, v(k) denotes the velocity in a k-th step (refer to FIG. 6 and the description on the step of prediction horizon to be described later), $F_t$ denotes wheel traction force, $F_b$ denotes wheel braking force, m denotes mass of vehicle, $F_{roll}$ denotes rolling resistance, $F_{air}$ denotes air resistance, $F_g$ denotes gravity resistance, and $\triangle s$ denotes movement distance in one step.

From the dynamics equation, models of state variable $v^2$ and input variables $F_t$ and $F_b$ may be obtained as in Equation 2 below.

[Equation 2]

$$x(k+1) = A_p x(k) + B_p u + B_\phi \Phi$$

$$x(k) = v(k)^2, \quad u = [F_t \ F_b]'$$

Here, $A_p$, $B_p$, $B_\phi$, and $\Phi$ are as in Equation 3 below.

[Equation 3]

$$A_p = (1 - \tfrac{1}{m}\rho c_d A_d \triangle s), \quad B_\phi = 1,$$

$$B_p = \left[ \tfrac{2\triangle s}{m} \quad \tfrac{-2\triangle s}{m} \right],$$

$$\Phi = -2\triangle s \cdot g(c_r \cos\theta + \sin\theta)$$

Here, $\rho$ denotes air density, $C_d$ denotes coefficient of drag, and $C_r$ denotes coefficient of rolling resistance.

The models of state variable in Equation 2 for each step may be expressed as Equation 4 below.

[Equation 4]

$$x(1) = A_p x(0) + B_p u_0 + B_\phi \Phi(\theta_1)$$
$$x(2) = A_p x(1) + B_p u_1 + B_\phi \Phi(\theta_2)$$
$$x(3) = A_p x(2) + B_p u_2 + B_\phi \Phi(\theta_3)$$

$$\vdots$$

2. Determining prediction horizon and collecting traveling environment information on the corresponding section in step S40

A prediction horizon corresponds to a section to use information for calculating an optimal solution (target traction force and braking force) in the present control method.

The prediction horizon may be set based on distance, but may also be set based on time.

The optimal solution may be calculated by each step using information on the entire prediction horizon.

In addition, the length of one step may be defined as $\Delta s$ in the case of distance-based step and defined as $\Delta t$ in the case of time-based step.

For example, when one step $\Delta s$ is 20 m and the prediction horizon is 1,500 m, an optimal solution is calculated using the information on a section 0 to 1,500 m so as to obtain target traction force and braking force of the driving control in a range 0 to 20 m, then a section from 20 m to 1,520 m is set to be a follow-up prediction horizon so as to calculate an optimal solution using the corresponding section information, thereby obtaining target traction force and braking force for a range from 20 m to 40 m. The same process goes for subsequent steps and prediction horizons. In this example, the prediction horizon is kept constant at 1,500 m, but the present disclosure is not limited thereto.

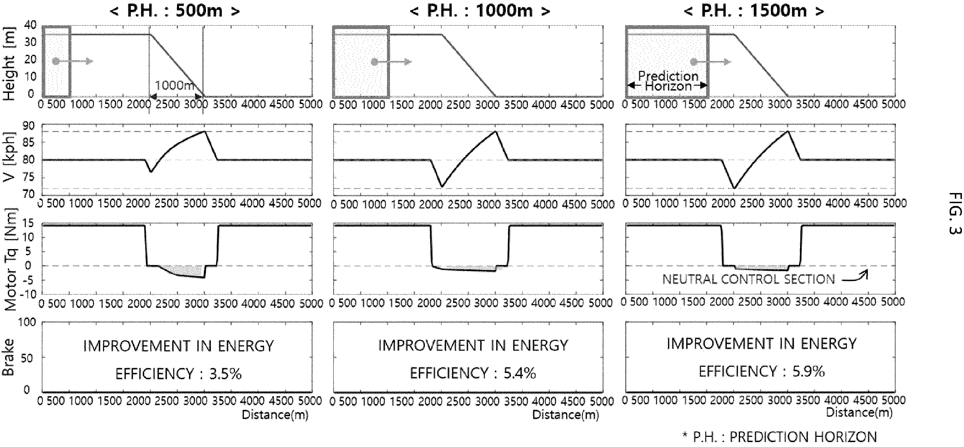

FIG. 3 shows the results of examples in which the optimal solution is calculated by changing the prediction horizon to 500 m, 1000 m, and 1,500 m for the total travel distance of 5,000 m.

The road used in the embodiment of FIG. 3 includes a steel plate section in a section from 2,000 m to 3,000 m as shown, and the length of one step stays at 20 m.

For the improvement in energy efficiency for the three cases, it is shown to be 3.5% for the prediction horizon of 500 m, 5.4% for the prediction horizon of 1,000 m, and 5.9% for the prediction horizon of 1,500 m, and therefore, it can be seen that the efficiency is most improved in the case of the prediction horizon of 1,500 m.

The longer the prediction horizon, the more information is used, so the efficiency may be further improved. However, the computational load increases as the prediction horizon gets longer, and thus an appropriate compromise needs to be made for the length of the prediction horizon.

Once the prediction horizon is determined, traveling environment information on the prediction horizon is collected.

The traveling environment information may include real-time variable information and non-variation information, which does not vary at least for the duration of traveling in the corresponding prediction horizon.

For example, real-time variable information includes the distance from a preceding vehicle, and non-variable information includes road shape-related information such as curvature and slope of the road, information on speed limit assigned to a specific road section, and information on the location of a traffic enforcement camera.

Here, for example, the information on the distance from a preceding vehicle may be collected using a distance measuring sensor such as radar or LiDAR, and all of the above-described non-variable information may be collected from map data of a navigation system. Of course, it is not necessary to limit the means configured to obtain non-variable information to the navigation system.

3. Objective function (S50)

(1) Calculating wheel power and battery power (S51 and S52)

First, a wheel power $P_m$ may be defined as Equation 5 below.

[Equation 5]

$$P_m = F_t\, v$$

Since an energy source for driving a wheel is a battery, time-based battery power may be defined as Equation 6 below using the wheel power.

[Equation 6] when $F_t \geq 0$ (driving, discharging)

$$P_{b,t} = \frac{P_m}{\eta_{total}} = \frac{F_t v}{\eta_m \eta_{b,dis}}$$

when $F_t<0$ (back driving, charging)

$$P_{b,t} = P_m \cdot \eta_{total}$$
$$= F_t v \cdot \eta_m \, \eta_{b,cha}$$

Here, $\eta_m$ denotes motor efficiency, and $\eta_b$ denotes charge and discharge efficiency of a battery.

In addition, distance-based battery power may be defined as Equation 7 below.

[Equation 7]

when $F_t \geq 0$ (driving, discharging)

$$P_{b,s} = \frac{P_{b,t}}{v} = \frac{F_t}{\eta_m \eta_{b,dis}}$$

when $F_t<0$ (back driving, charging)

$$P_{b,s} = \frac{P_{b,t}}{v}$$
$$= F_t \cdot \eta_m \, \eta_{b,cha}$$

(2) Approximating battery power (i.e., obtaining an approximated battery power function by use of the calculated battery power) (S54)

Approximation of battery power may be time-based or distance-based. For the sake of describing convenience, the case of distance-based approximation will be described below.

Battery power may be approximated as a linear plane or a quadratic plane on state variable and input variable planes.

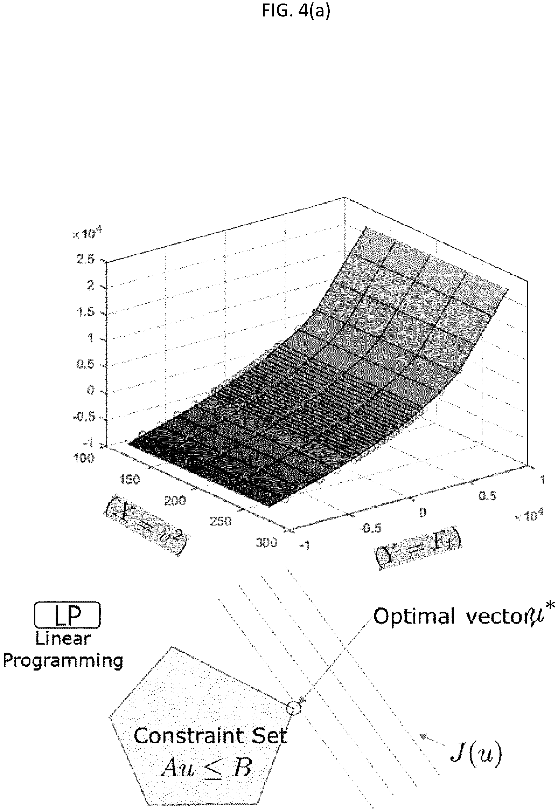

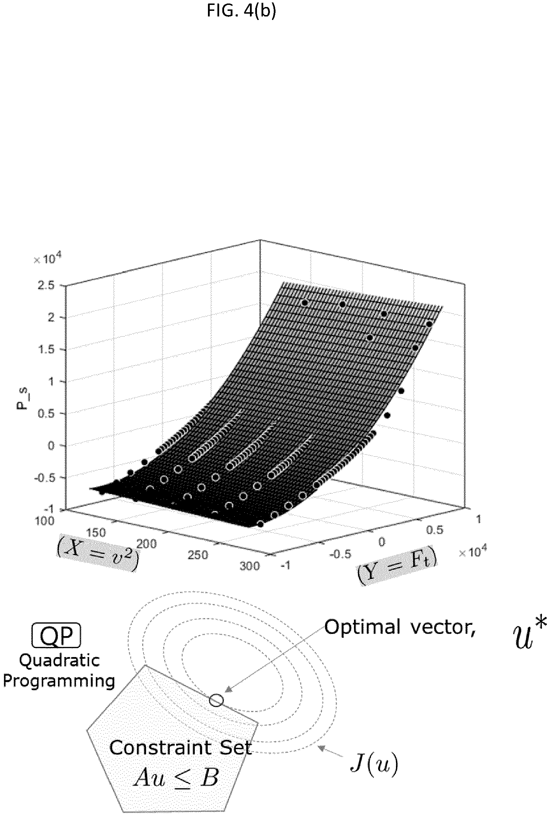

FIG. 4A shows linear planar approximation, and FIG. 4B shows quadratic planar approximation. In the case of linear planar approximation, a solution can be obtained only at the vertex of a constraint (Au < B, all constraints may be expressed as input variables using the state variable model as will described later) when calculating an optimal solution to an objective function J. Therefore, it is preferable to use quadratic planar approximation.

In the case of quadratic planar approximation, battery power may be expressed as Equation 8 below with functions of state variables and input variables, and coefficients p00, p10, p01, and p02 are obtained by quadratic planar fitting.

[Equation 8]

$$P_{b,s}(F_t, v^2) = p00 + p10 \cdot v^2 + p01 \cdot F_t + p20 \cdot v^4 + p11 \cdot v^2 F_t + p02 \cdot F_t^2$$

Here, because an error may be large when the entire trajectory is fitted to the quadratic plane, only a set band area of the target velocity is selected and fitted so as to improve accuracy.

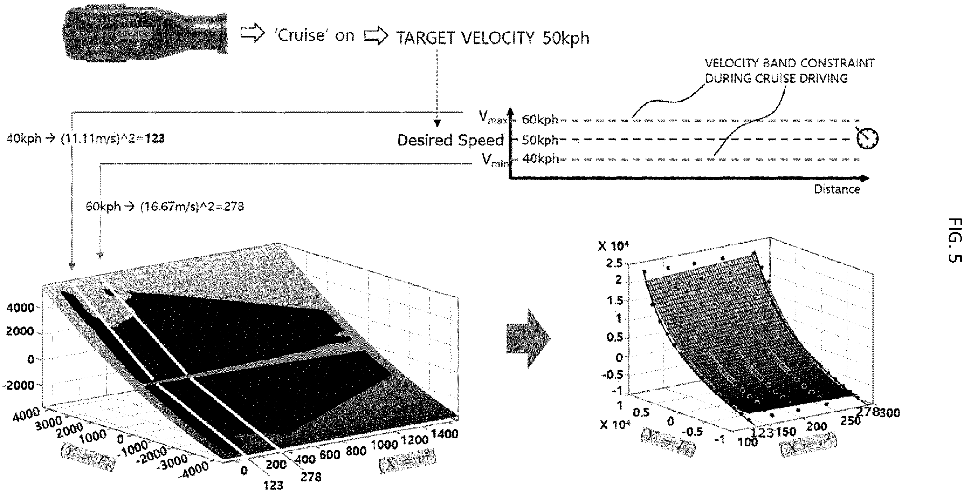

In other words, as shown in FIG. 5, when a driver selects the velocity 50 kph as a cruise control setting, the fitting is performed only in a region from 123 kph to 278 kph, which is the velocity band region of +10 kph.

Meanwhile, the battery power function may be expressed as a function of only the input variable, with no state variable, using the above-described model.

(3) Generating target-velocity-following function in step S53

The target-velocity-following function is to follow the target velocity in the case of traveling on a flat road without slope, and may be defined as a function as in Equation 9 below.

[Equation 9]

$$(v(k+1)^2 - V_{target}^2)^2$$

(4) Collecting objective function (S55)

First, for example, the total distance of the prediction horizon is "$S_{ph}$" as shown in FIG. 6, and is calculated by dividing the same into n steps of $\triangle s$.

The final objective function obtained by summing the battery function and the target-velocity-following function for the prediction horizon is as shown in Equation 10 below.

[Equation 10]

$$J = \sum_{k=0}^{n-1} w_1 \cdot P_{b,s}\triangle s + w_2 \cdot (v(k+1)^2 - V_{target}^2)^2 + s_1 \cdot \epsilon_{k+1}^2 + s_2 \cdot \epsilon_{k+1}$$

Here, $\varepsilon$ is for soft constraint and allows instantaneous violation of the constraint. For example, $\varepsilon$ may be set for turbo speed limit condition, the amount of violation is indicated as $\varepsilon$, and the amount of violation is determined by setting primary and secondary weights $s_1$ and $s_2$ in the objective function.

In addition, $w_1$ and $w_2$ are weights, more specifically, $w_1$ is a weight for battery power, and $w_2$ is a weight for the target-velocity-following function.

The state variable and input variable for n steps may be expressed in column vector forms U and X, respectively, whereby the battery power function of Equation 10 may be expressed in vector form as shown in Equation 11 below.

[Equation 11]

$$w_1 \sum_{k=0}^{n-1} P_{b,s} \cdot \triangle s = w_1 \cdot P_{b,s}(U, X) \cdot \triangle s$$

Equation 11 above may be expressed as Equation 12 below by the quadratic planar approximation as described above.

[Equation 12]

$$w_1 \left(p00 + p10 \cdot X + p01 \cdot U + p11 \cdot XU + p02 \cdot U^2\right) \triangle s$$

In addition, the state variable model is expressed in a vector form as in Equation 13 below, and when substituted into Equation 12, the battery function may be expressed as in Equation 14 below.

[Equation 13]

$$X = \bar{A}x(0) + \bar{B}U + \bar{B}_\phi \Phi$$

[Equation 14]

$$w_1 p10 \bar{B} U \triangle s + w_1 p01 \cdot U \triangle s + w_1 \cdot p11(\bar{A}x(0) + \bar{B}_\phi \Phi)U \triangle s + U^T w_1 (p11 \bar{B}^T + p02) \triangle s \cdot U$$

The target-velocity-following function may also be expressed in a vector form, and may be expressed as Equation 15 below.

[Equation 15]

$$w_2 U^T \bar{B}^T \bar{B} U + [2w_2 X(0)\bar{A}^T \bar{B} + 2w_2 \Phi^T \bar{B}_\phi{}^T \bar{B} - 2w_2 V_{target} \bar{B}]U + C$$

Here, C is a constant and may be excluded.

4. Constraints (S60)

(1) Average velocity constraint (S61)

The average velocity constraint is, for example, to follow the cruise control target velocity, and may be set as a condition in which the average value of $v^2$ is greater than the square of the predetermined target velocity $v_{target}$ within the prediction horizon.
In other words, the average velocity constraint may be expressed as Equation 16 below.

[Equation 16]

$$\frac{x(1) + x(2) + \cdots + x(N_p)}{N_p} \geq V_{target}^2 \cdot \alpha$$

Here, $\alpha$ denotes an adjustment parameter, and $N_p$ is an integer indicating the prediction horizon, which is the same as n in Equation 10 above.
When $\alpha$ is set as a time penalty, additional efficiency improvement may be achieved even through there is a disadvantage in traveling time.
Due to characteristics of electric vehicles, in the case in which the remaining travelable distance is insufficient in terms of battery power and thus active using of energy-saving driving is needed, this may be addressed using $\alpha$. In other words, $\alpha$ is inversely proportional to efficiency improvement and travel time.
Meanwhile, although omitted from this specification, the above constraint may also be expressed in a vector form by substituting and applying the state variable model.

(2) Traveling velocity band constraint (S62)

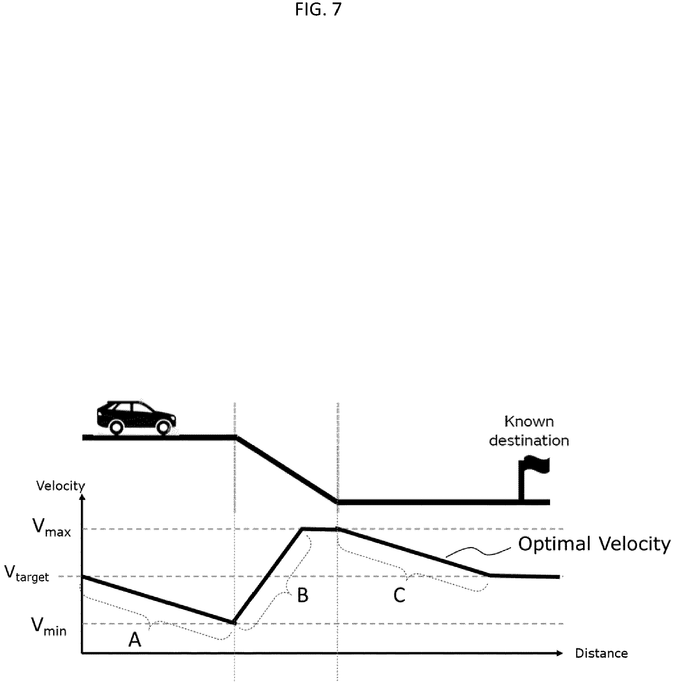

The constraint is, for example, a velocity band constraint of $\pm\Delta v$ with respect to the cruise control target velocity.
When traveling on a road with a longitudinal slope, an allowable $\pm\Delta v$ in addition to the target velocity is needed for energy-efficient traveling.
For example, as shown in FIG. 7, when cruise control target velocity $v_{target}$ is set, it is allowed to deviate from the target velocity $v_{target}$ within the range between the maximum velocity $v_{max}$ and the minimum velocity $v_{min}$ before, after, and while traveling on downhill roads.

In other words, before traveling on downhill roads, during section 'A', the vehicle is decelerated to the minimum speed $v_{min}$ at or under the target velocity $v_{target}$, in a part of section 'B', including the initial stage of the traveling on downhill roads, the vehicle accelerates and maintains the maximum speed $v_{max}$ while performing regenerative braking, and then in section 'C', which is after the traveling on downhill roads, the vehicle returns to the target velocity $v_{target}$ while increasing energy efficiency through neutral control.

The traveling velocity band constraint is expressed as Equation 17 below.

[Equation 17]

$$v_{min}^2 - \epsilon \le x \le v_{max}^2, \quad \epsilon \ge 0$$

Here, $\epsilon$ is for treating the constraint as a soft constraint to secure a safe distance from a preceding vehicle.

(3) Motor constraint according to a vehicle velocity (S63)

The constraint is a condition due to the torque limit of a driving motor.

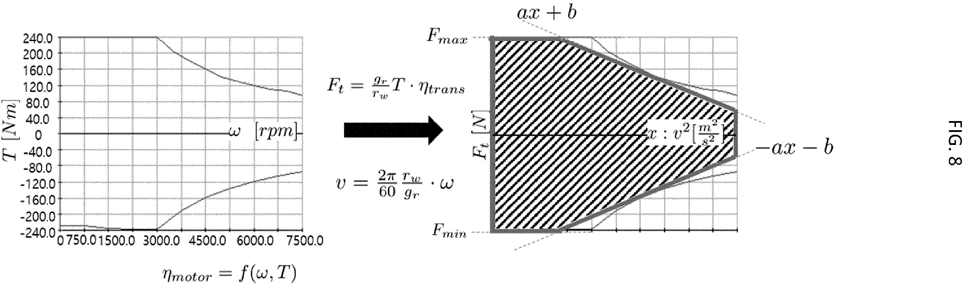

The left diagram of FIG. 8 shows a motor diagram, which may be the same as the diagram on the right when the left diagram is changed by state variable and input variable and the curved part is approximated into a straight line.

In FIG. 8, $F_{max}$ and $F_{min}$ are respectively the same as in Equation 18 below.

[Equation 18]

$$F_{max} = \frac{g_r}{r_w} T_{max} \cdot \eta_{trans}, \quad F_{min} = \frac{g_r}{r_w} T_{min} \cdot \eta_{trans}$$

For example, the constraint limits the traction force and the braking force within the shaded region in the right diagram of FIG. 8, and the maximum and minimum conditions are expressed as Equation 19 below.

[Equation 19]

$$F_{t,min} \le input, u \le F_{t,max}$$

Here, $F_{t,max}$ and $F_{t,min}$ are respectively the same as in Equation 20 below.

[Equation 20]

$$F_{t,min} = max(F_{min}, -ax - b) \quad F_{t,max} = min(F_{max}, ax + b)$$

(4) Safe velocity constraint according to road curvature (S64)

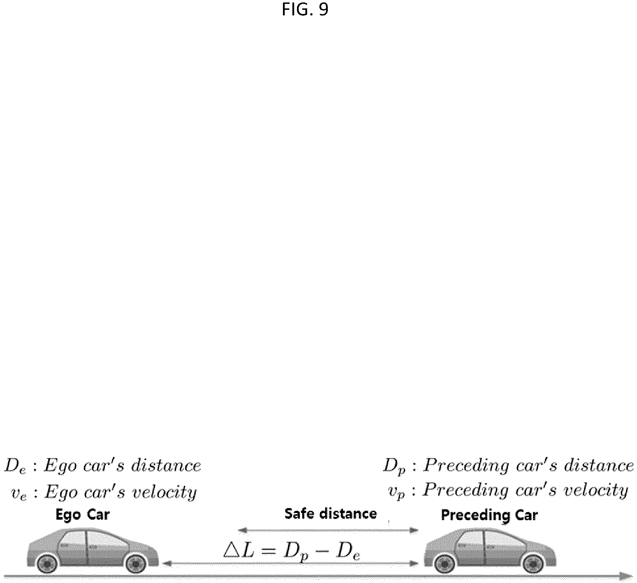

The constraint is a condition for securing a safe distance from a preceding vehicle as shown in FIG. 9.

The distance $\Delta L$ between an ego vehicle and a preceding vehicle must be greater than a predetermined safe distance $\Delta L_S$. In other words, the constraint is expressed in Equation 21 below.

[Equation 21]

$$\triangle L(k+1) \geq \triangle L_s(k+1)$$

Here, the right side of the above equation may be defined as Equation 22 below using the proportional constant h and the minimum safe distance $\ell$ at the time of stopping.

[Equation 22]

$$\triangle L_s(k+1) = h \cdot v_e(k+1) + l$$

By substituting Equation 22 into Equation 21, the final present constraint may be expressed as Equation 23 below.

[Equation 23]

$$v(k)^2 \leq \left(\frac{\triangle L(k)-l}{h}\right)^2$$

(5) Velocity constraint according to road curvature (S65)

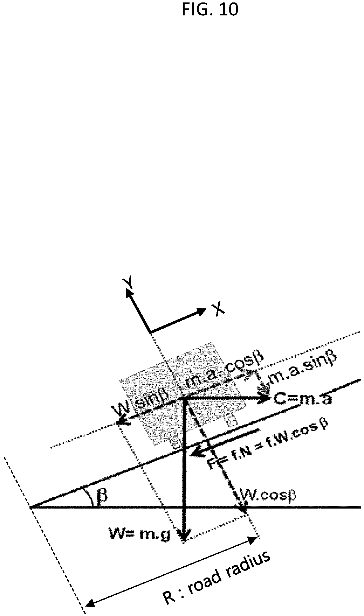

The constraint is a condition that limits the maximum velocity for safety when the vehicle performs turning.
In the state in which a vehicle travels as shown in FIG. 10, the maximum velocity for safety may be obtained under the condition that the sum of all forces acting on the vehicle with respect to the lateral inclination of the road (road bank slope) $\beta$, the road curvature $k$, and the friction coefficient f of the road surface becomes 0 (zero). The constraint limiting the velocity to the maximum velocity or less may be expressed as Equation 24 below.

[Equation 24]

$$v^2 \leq \frac{g \cdot (tan\beta + f)}{k}$$

Here, g denotes the gravitational acceleration.
Although five types of constraints have been described, constraints are not limited thereto, and it is natural that constraints may be further added in consideration of safety, efficiency, driver's demands, and the like.
In addition, although omitted from this specification, all of the above described constraints may also be expressed as input variables using the state variable model equation, and may be expressed in a vector form.

5. Calculating optimal solution in step S70

This step is a process of calculating an optimal solution by applying the constraints to the above-described objective function.

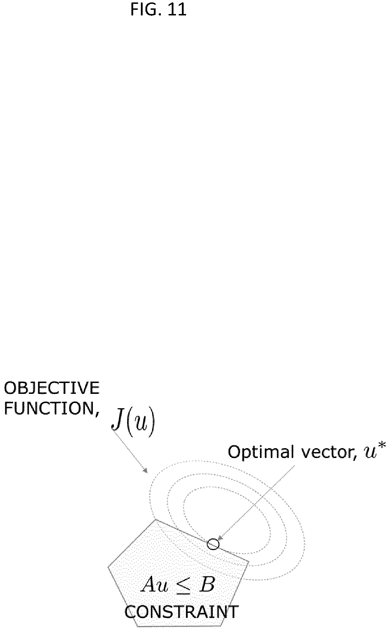

FIG. 11 schematically shows the process of calculating an optimal solution, and as shown, an optimal traction force $u1_{opt}$ and an optimal braking force $u2_{opt}$ are calculated by the quadratic programming method by applying the above-mentioned constraints.
The optimal solution may be obtained as an optimal solution vector u* for all the steps within the prediction horizon, and only the first input value (the optimal solution corresponding to the first step in FIG. 6) may be used.

In other words, an optimal solution is expressed as a traction force and a braking force, and is scalable by an iterative structure in which the optimal solution of the quadratic programming method is obtained at every step (distance step $\Delta s$ or time step $\Delta t$) and is controlled using only the first input value, i.e., model predictive control (MPC).

The distribution of regenerative braking may be determined according to the magnitude of the braking force obtained by the optimal solution (S80), which will be described below.

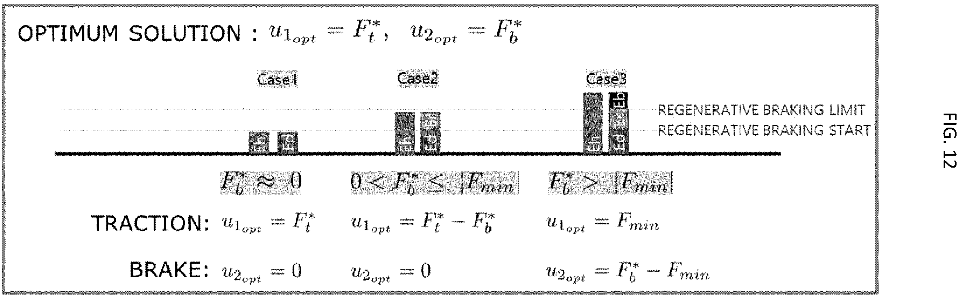

First, FIG. 12 shows the distribution of regenerative braking for three cases. In FIG. 12, Eh denotes gravitational potential energy (just before traveling on downhill road), Ed denotes kinetic energy, Er denotes regenerative brake energy, and Eb denotes energy dissipated by mechanical braking.

In case 1, all the vehicle's gravitational potential energy is converted into kinetic energy by the traction force. Here, as a result of the optimal solution, the traction force $F_t^*$ is greater than or equal to 0, and the braking force $F_b^*$ is 0, so that no braking force is needed.

In case 2, the calculated $F_b^*$ is greater than 0 and is less than the 'absolute value of $F_{min}$', which is a threshold value. Accordingly, all of the calculated braking force is distributed to regenerative braking. Here, the traction force is controlled as '$F_t^* - F_b^*$' in consideration of regenerative braking. Here, $F_{min}$ is a value expressing the maximum limit of regenerative braking of the motor as a force at the wheel in consideration of the radius, gear ratio, efficiency, etc.

In the case 3, the gravitational potential energy is very large, so that the calculated $F_b^*$ is greater than or equal to the threshold value. Here, regenerative braking is distributed to the maximum, and the difference '$F_b^* - F_{min}$' is distributed to mechanical braking.

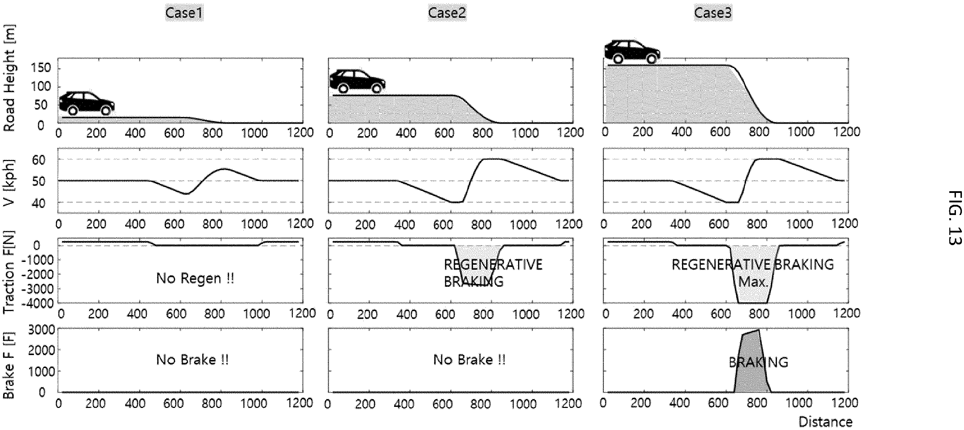

FIG. 13 shows the control states of the velocity and traction force, regenerative braking and mechanical braking, etc. according to the movement distance of the vehicle in these three cases.

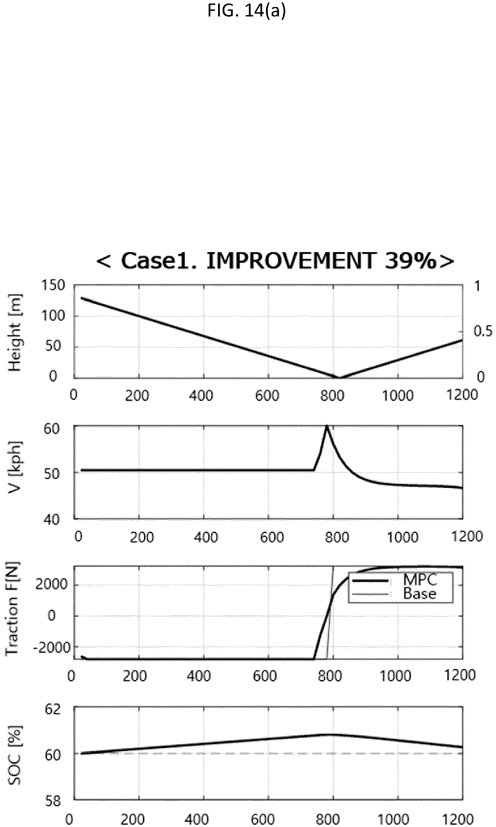

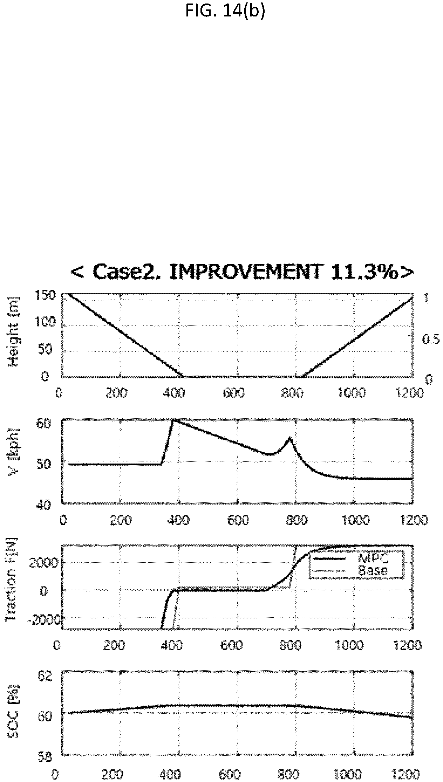

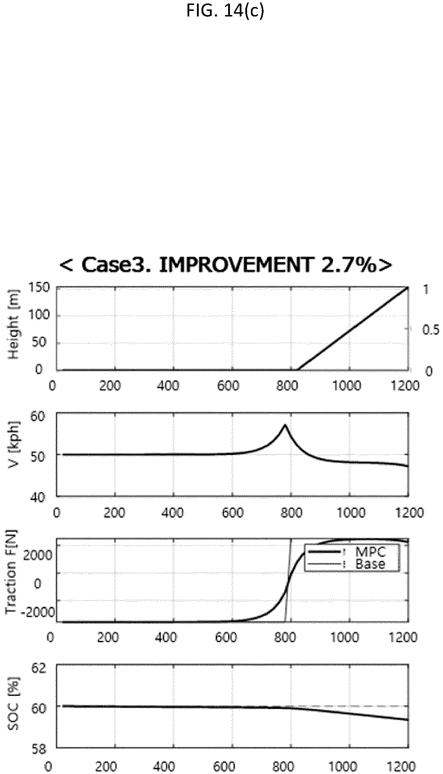

FIGS. 14A, 14B, and 14C show simulation results of velocity, traction force, and battery state (SOC) when a vehicle is traveling on three types of roads by applying the method of this embodiment. In case 1, where the downhill section is long and uphill is short, the improvement is 39%, and in the case 2, where the downhill and uphill sections have the same slope and length, 11.3% improvement is achieved. Meanwhile, in case 3, where there is no downhill section and only an uphill section exists, just 2.7% improvement is achieved.

As can be seen from these results, in the control according to the present embodiment, the energy efficiency improvement may be low for the terrain only including simple flat and uphill sections, but the efficiency is greatly improved on downhill terrain.

In addition, the effect of energy efficiency improvement is exhibited at the point of recognizing the time when the road slope changes and preemptively controlling the kinetic energy of the vehicle.

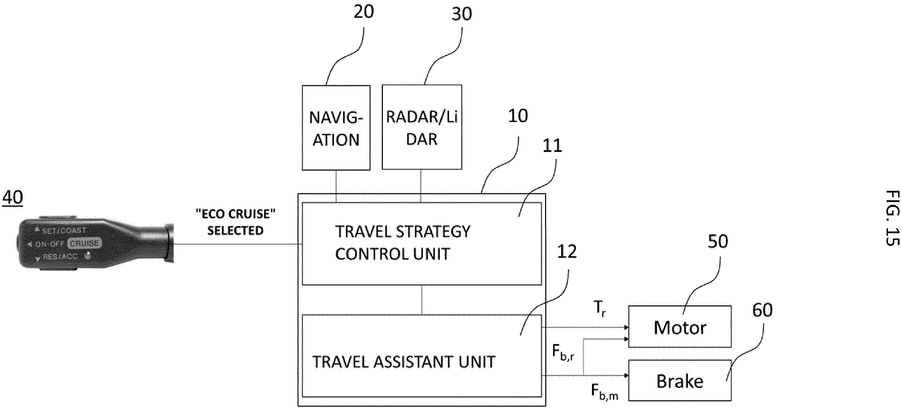

Meanwhile, as shown in FIG. 15, the control method of the present disclosure may be implemented by being included in a vehicle driving control device 10 including a travel strategy control unit 11 and a travel assistant unit 12.

When a driver selects, for example, "eco cruise" mode through the travel mode selector 40, a target velocity for cruise control is determined, road slope and curvature information, speed limit information, and traffic enforcement camera location information are collected from navigation map data 20 (e.g., a server or a recording medium) for each prediction horizon, and information on the distance to a preceding vehicle information is collected from a radar or LiDAR sensor 30. Using the collected information, the optimal drive force and braking force for the corresponding prediction horizon are obtained through the above-described equations and the process of calculating the optimal solution.

The obtained results of drive force and braking force are transmitted to the travel assistant unit 12, and the travel assistant unit 12 transmits a target driving torque and braking force to a motor 50 and a brake 60 so as to allow the same to be used for control.

Here, the distribution of regenerative braking described above may be determined depending on the magnitude of the braking force calculated by the optimal solution, and the distribution result may be transmitted to the travel assistant unit 12. In Fig. 15, $F_{b,r}$ denotes the regenerative braking force, and $F_{b,m}$ denotes the mechanical braking force of the brake.

In this embodiment, the travel strategy control unit 11 may include a data input and output device, at least one processor configured to perform judgment, calculation, determination, and the like, and a non-transitory memory configured to store an operating system or logic commands, input and output information, etc. In addition, when it is needed to receive information through communication from the outside, a communication device may be added. However, the communication device may be separately provided in the vehicle and the travel strategy control unit 11 may be configured to receive the corresponding information only through the input and output device.

In addition, the travel assistant unit 12 may include a data input and output device, at least one processor configured to perform judgment, calculation, determination, and the like, and a non-transitory memory configured to store an operating system or logic commands, input and output information, etc.

The travel strategy control unit 11 and the travel assistant unit 12 do not need to be physically separated and may be configured as an integrated unit. Such an integrated unit may also include a data input and output device, at least one processor configured to perform judgment, calculation, determination, and the like, and a non-transitory memory configured to store an operating system or logic commands, input and output information, etc. In this case, one processor may perform functions such as judgment and calculation for the travel strategy control unit 11 as well as functions for the travel assistant unit 12.

In addition, the vehicle driving control device 10 according to the above-described embodiment may be applied to any vehicle that can be driven by a motor, such as a hybrid vehicle or an electric vehicle.

According to at least one embodiment of the present disclosure, it is possible to achieve optimal driving control in terms of energy efficiency in a vehicle driven by electric power and a motor, for example, an electric vehicle or a hybrid vehicle.

At least one embodiment of the present disclosure may achieve improved driving control in an energy-efficient manner by its own travel control technology or by being combined with existing travel control technologies such as cruise control.

It will be apparent to those skilled in the art that various modifications and variations can be made in the present disclosure without departing from the spirit or scope of the disclosure. Thus, it is intended that the present disclosure cover the modifications and variations of this disclosure provided they come within the scope of the appended claims and their equivalents.

**Claims**

1. A vehicle driving control method with optimal efficiency, the method comprising:

    obtaining a state variable model of a longitudinal dynamics equation of a vehicle based on a velocity-related state variable and a wheel drive input variable;
    calculating wheel power using the velocity-related state variable and the wheel drive input variable;
    calculating battery power using the calculated wheel power;
    obtaining an approximated battery power function using the calculated battery power; and
    outputting a wheel drive control target by calculating a minimum solution by using the approximated battery power function as an objective function and applying at least one constraint to the objective function.

2. The method according to claim 1, wherein the wheel drive control target comprises a wheel traction force and/or wheel braking force.

3. The method according to claim 1 or 2, wherein the velocity-related state variable comprises a square of velocity, and the wheel drive input variable comprises traction force and braking force for a wheel.

4. The method according to one of claims 1-3, wherein the calculating of battery power is performed by multiplying the calculated wheel power by at least one of motor efficiency, battery charging and discharging efficiency, and reducer efficiency.

5. The method according to one of claims 1-4, wherein the state variable model is defined by a relationship between a work done by a wheel and a change in vehicle kinetic energy under air resistance, rolling resistance, and gravity resistance for a predetermined distance movement.

6. The method according to one of claims 1-5, wherein the objective function further comprises a target-velocity-following function.

7. The method according to one of claims 1-6, wherein the at least one constraint comprises an average velocity constraint.

8. The method according to one of claims 1-7, wherein the at least one constraint comprises a traveling velocity band constraint.

9. The method according to one of claims 1-8, wherein the at least one constraint comprises a motor constraint according to a vehicle velocity.

10. The method according to one of claims 1-9, wherein the at least one constraint comprises a safe distance constraint from a preceding vehicle.

11. The method according to one of claims 1-10, wherein the at least one constraint comprises a safe velocity constraint according to a road curvature.

**12.** The method according to one of claims 1-11, wherein the obtaining of a state variable model, the calculating of wheel power, the calculating of battery power, the obtaining of an approximated battery power function, and the outputting of a wheel drive control target are performed for a set forward prediction horizon, wherein, optionally, the set forward prediction horizon is divided into a plurality of distance-based or time-based steps, the minimum solution is calculated for all of the plurality of distance-based or time-based steps, and the wheel drive control target is obtained from a minimum solution corresponding to a first step among the plurality of distance-based or time-based steps.

**13.** The method according to claim 12, wherein the set forward prediction horizon is defined as a range of time distance or traveling distance, and/or wherein the set forward prediction horizon is constant.

**14.** The method according to claim 2 or according to one of claims 3-13 in combination with claim 2, wherein, when the output wheel braking force is less than or equal to a predetermined value, all of the output wheel braking force is distributed to regenerative braking force, and when the output wheel braking force exceeds the predetermined value, the output wheel braking force is distributed to regenerative braking force and mechanical braking force.

**15.** The method according to one of claims 1-14, wherein the approximated battery power function comprises a quadratic function of the velocity-related state variable and the wheel drive input variable.

**16.** The method according to one of claims 1-15, further comprising receiving a selection of a cruise control travel mode by a user.

**17.** The method according to one of claims 1-16, further comprising performing a brake or motor control of the vehicle based on the outputted wheel drive control target.

**18.** A vehicle driving control device comprising:

a travel strategy control unit configured to collect curvature and slope information, speed limit information, and traffic enforcement camera location information for a road section in a set forward prediction horizon, collect information on a distance from a preceding vehicle from a sensor, and to calculate a minimum solution of an objective function by applying at least one constraint among an average velocity constraint, a traveling velocity band constraint, a motor constraint according to a vehicle velocity, a safe distance constraint from a preceding vehicle, and a safe velocity constraint according to a road curvature, wherein a battery power for traveling in the set forward prediction horizon is used as the objective function; and
a travel assistant unit configured to output a control signal so as to control a motor and a brake with traction force and braking force derived from the minimum solution.

FIG. 1

S10
START

S20
DRIVER'S SETTING A TARGET VELOCIGY

S30
OBTAINING A STATE VARIABLE MODEL OF LONGITUDINAL DYNAMICS EQUATION

S40
DETERMINE PREDICTION HORIZON AND COLLECT TRAVELING ENVIRONMENT INFORMATION FOR CORRESPONDING SECTION

S50
S51
CALCULATE WHEEL POWER

S52
CALCULATE BATTERY POWER

S53
GENERATE TARGET-VELOCITY-FOLLOWING FUNCTION

S54
APPROXIMATE BATTERY POWER

S55
COLLECT OBJECTIVE FUNCTION

STATE VARIABLE MODEL

PREDICTION HORIZON

OBJECTIVE FUNCTION

S60

S61
AVERAGE VELOCITY CONSTRAIN

S62
TRAVELING VELOCITY BAND CONSTRAINT

S63
MOTOR CONSTRAINT ACCORDING TO A VEHICLE VELOCITY

no PRECEDING VEHICLE ?
S64 yes
SAFE DISTANCE CONSTRAINT FROM A PRECEDING VEHICLE

no CURVED ROAD ?
S65 yes
SAFE VELOCITY CONSTRAINT ACCORDING TO ROAD CURVATURE

CONSTRAINTS COLLECTOR

CONSTRAINT

S70
CALCULATE OPTIMAL SOLUTION BY QUADRATIC PROGRAMMING METHOD

OPTIMAL SOLUTION :

$u_{1_{opt}} = F_t^*,\ Traction force$
$u_{2_{opt}} = F_b^*,\ Brake force$

S80
$F_b^* > |F_{min}|$

no

yes

$u_{1_{opt}} = F_{min}$
$u_{2_{opt}} = F_b^* - |F_{min}|$

$u_{1_{opt}} = F_t^* - F_b^*$
$u_{2_{opt}} = 0$

END

16

FIG. 2

$F_t$ : Traction Force
$F_b$ : Brake Force

< P.H. : 500m >   < P.H. : 1000m >   < P.H. : 1500m >

IMPROVEMENT IN ENERGY EFFICIENCY : 3.5%

IMPROVEMENT IN ENERGY EFFICIENCY : 5.4%

IMPROVEMENT IN ENERGY EFFICIENCY : 5.9%

* P.H. : PREDICTION HORIZON

NEUTRAL CONTROL SECTION

FIG. 3

EP 4 197 869 A1

FIG. 4(a)

FIG. 4(b)

FIG. 5

FIG. 6

FIG. 7

FIG. 8

FIG. 9

$D_e : Ego\ car's\ distance$
$v_e : Ego\ car's\ velocity$

$D_p : Preceding\ car's\ distance$
$v_p : Preceding\ car's\ velocity$

**Ego Car**

**Safe distance**

**Preceding Car**

$$\triangle L = D_p - D_e$$

FIG. 10

FIG. 11

OBJECTIVE
FUNCTION, $J\left(u\right)$

Optimal vector, $u^{*}$

$Au \leq B$
CONSTRAINT

OPTIMUM SOLUTION : $u_{1_{opt}} = F_t^*, \quad u_{2_{opt}} = F_b^*$

Case1  Case2  Case3

REGENERATIVE BRAKING LIMIT
REGENERATIVE BRAKING START

$F_b^* \approx 0 \qquad 0 < F_b^* \leq |F_{min}| \qquad F_b^* > |F_{min}|$

TRACTION: $u_{1_{opt}} = F_t^* \qquad u_{1_{opt}} = F_t^* - F_b^* \qquad u_{1_{opt}} = F_{min}$

BRAKE: $u_{2_{opt}} = 0 \qquad u_{2_{opt}} = 0 \qquad u_{2_{opt}} = F_b^* - F_{min}$

FIG. 12

FIG. 13

FIG. 14(a)

< Case1. IMPROVEMENT 39%>

FIG. 14(b)

< Case2. IMPROVEMENT 11.3%>

FIG. 14(c)

< Case3. IMPROVEMENT 2.7%>

FIG. 15

EP 4 197 869 A1

Europäisches
Patentamt
European
Patent Office
Office européen
des brevets

**EUROPEAN SEARCH REPORT**

Application Number

EP 22 18 3308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2019 219806 A1 (ZAHNRADFABRIK FRIEDRICHSHAFEN [DE]) 17 June 2021 (2021-06-17) * paragraphs [0009], [0013] - [0015], [0023], [0024], [0048] - [0053] * ----- | 1-18 | INV. B60W10/08 B60W10/18 B60W10/26 B60W20/14 B60W30/14 B60W40/10 B60W50/00 |
| X | WO 2021/078391 A1 (ZAHNRADFABRIK FRIEDRICHSHAFEN [DE]) 29 April 2021 (2021-04-29) * the whole document * ----- | 1-18 | |
| A | EP 3 828 048 A1 (TOYOTA MOTOR CO LTD [JP]) 2 June 2021 (2021-06-02) * paragraphs [0050] - [0059]; claims 1,6,9 * ----- | 1-18 | |

TECHNICAL FIELDS
SEARCHED      (IPC)

B60W

The present search report has been drawn up for all claims

| Place of search | Date of completion of the search | Examiner |
|---|---|---|
| Munich | 26 April 2023 | Rameau, Pascal |

EPO FORM 1503 03.82 (P04C01)

## ANNEX TO THE EUROPEAN SEARCH REPORT
## ON EUROPEAN PATENT APPLICATION NO.

EP 22 18 3308

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2023

| Patent document cited in search report | Publication date | Patent family member(s) | | Publication date |
|---|---|---|---|---|
| DE 102019219806 A1 | 17-06-2021 | NONE | | |
| WO 2021078391 A1 | 29-04-2021 | CN | 114555406 A | 27-05-2022 |
| | | US | 2022371450 A1 | 24-11-2022 |
| | | WO | 2021078391 A1 | 29-04-2021 |
| EP 3828048 A1 | 02-06-2021 | BR | 102020022951 A2 | 01-06-2021 |
| | | CN | 112848906 A | 28-05-2021 |
| | | EP | 3828048 A1 | 02-06-2021 |
| | | JP | 2021075266 A | 20-05-2021 |
| | | KR | 20210058704 A | 24-05-2021 |
| | | RU | 2749742 C1 | 16-06-2021 |
| | | US | 2021138909 A1 | 13-05-2021 |

EPO FORM P0459

**REFERENCES CITED IN THE DESCRIPTION**

**Patent documents cited in the description**

- KR 1020210180478